# EUROPÄISCHE PATENTSCHRIFT

(11) **EP 1 789 286 B1**
(45) Veröffentlichungstag und Bekanntmachung des Hinweises auf die Patenterteilung: **14.01.2009**
(21) Anmeldenummer: 05769646.0
(22) Anmeldetag: 14.07.2005
(51) Int. Cl.: B60R 16/02

(54) **SCHALTUNGSANORDNUNG ZUR KURZZEITIGEN AUFRECHTERHALTUNG EINER VERSORGUNGSSPANNUNG**
CIRCUIT ARRANGEMENT FOR SHORT-TERM MAINTENANCE OF A SUPPLY VOLTAGE
CIRCUIT DESTINE A MAINTENIR BRIEVEMENT UNE TENSION D'ALIMENTATION D'UN ELEMENT DE CHARGE

(30) Priorität: 16.09.2004 DE 102004044761
(43) Veröffentlichungstag der Anmeldung: 30.05.2007
(73) Patentinhaber: Conti Temic microelectronic GmbH, 90411 Nürnberg (DE)
(72) Erfinder: KARCH, Martin, 91171 Greding (DE); LEHNER, Michael, 85053 Ingolstadt (DE)
(86) Internationale Anmeldenummer: PCT/DE2005/001246
(87) Internationale Veröffentlichungsnummer: WO 2006/029582

(56) Entgegenhaltungen:
- EP-A- 0 706 256
- DE-A1- 10 233 816
- DE-A1- 10 255 432
- FR-A- 2 845 837
- US-A- 5 023 468
- US-A- 6 056 076

## Beschreibung

Die Erfindung betrifft eine Schaltungsanordnung zur kurzzeitigen Aufrechterhaltung einer Versorgungsspannung zur Ansteuerung eines Lastelements bei Ausfall einer Eingangsspannung der Schaltungsanordnung, insbesondere einer Batterie- oder Netzspannung. Eine derartige Schaltungsanordnung ist aus den FR 2 845 837 A gemäß der Oberbegriff des Anspruchs 1 bekannt.

Schaltungsanordnungen dieser Art werden im Allgemeinen in Fahrzeugen zur separaten Spannungsversorgung von Steuergeräten, z. B. eines Steuergeräts mit einer Türen-Zentralverriegelungsanlage, eingesetzt.

Bei einem Unfall eines Fahrzeugs kann es beispielsweise zu einer Durchtrennung der Versorgungsleitung von der Batterie zu der Zentralverriegelung, insbesondere zu deren Steuergerät oder gar zu einer Zerstörung der Batterie kommen. Hierdurch kann nach einem Unfall, die Verriegelung der Tür mangels Stromversorgung nicht mehr aufgehoben werden.

Im Stand der Technik sind bereits Schaltungsanordnungen zur kurzzeitigen Aufrechterhaltung der Versorgungsspannung der Zentralverriegelung bekannt, die ein Entriegeln der Zentralverriegelung auch nach Ausfall der Stromversorgung ermöglichen.

So beschreibt die DE 195 42 085 A1 ein elektronisches Gerät, insbesondere eine Sicherheitseinrichtung für Fahrzeuginsassen, das zwei Spannungswandler aufweist, die von einem Mikrocontroller nach Maßgabe der Spannung einer Fahrzeugbatterie angesteuert werden. Mittels eines ersten Spannungswandlers wird ein als Reserveenergiequelle vorgesehener Kondensator auf einen höheren Spannungswert aufgeladen. Bei Abriss der Fahrzeugbatterie setzt ein zweiter Spannungswandler die Spannung des Kondensators auf einen niedrigen Wert herab.

In DE 197 46 546 C1 ist eine Schaltungsanordnung zur kurzzeitigen Aufrechterhaltung einer Ausgangsspannung für ein Lastelement bei Ausfällen einer Eingangsspannung mittels eines parallel zum Lastelement geschalteten Autarkiekondensators insbesondere für elektronische Baugruppen in Kraftfahrzeugen bekannt. Dabei wird die Eingangsspannung von einem DC/DC-Aufwärtswandler auf eine höhere Kondensatorspannung transformiert, diese im Autarkiekondensator gespeichert und die Kondensatorspannung von einem DC/DC-Abwärtswandler auf die Ausgangsspannung für das Lastelement transformiert, die kleiner ist als die Kondensatorspannung.

Bei beiden vorgenannten Vorrichtungen handelt es sich um aufwendige Konstruktionen mit komplexen Bauteilen, die jeweils einen Aufwärts- und einen Abwärtswandler bedürfen.

Der Erfindung liegt somit die Aufgabe zu Grunde, eine Schaltungsanordnung der eingangs genannten Art anzugeben, die mit wenigen Bauteilen kostengünstig herstellbar ist.

Die Aufgabe wird erfindungsgemäß gelöst durch eine Schaltungsanordnung, die die in Anspruch 1 angegebenen Merkmale aufweist.

Vorteilhafte Ausgestaltungen der Erfindung sind Gegenstand der Unteransprüche.

Dabei umfasst die erfindungsgemäße Schaltungsanordnung zur kurzzeitigen Aufrechterhaltung einer Versorgungsspannung zur Ansteuerung eines Lastelements, z. B. eines Steuergeräts für eine Zentralverriegelung, bei Ausfall einer Eingangsspannung, z. B. Batterie- oder Netzspannung, einen einzigen Spannungswandler, der die Eingangsspannung auf eine höhere Ladespannung zur Aufladung eines dem Spannungswandler nachgeschalteten Kondensators transformiert, wobei bei Ausfall der Eingangsspannung im Zusammenhang mit einer Notsituation, z. B. einem Unfall, der Eingang des Lastelementes mit dem Kondensator automatisch elektrisch verbunden wird. Durch eine derartige Integration einer autarken Energiespeichereinrichtung in Form eines Kondensators, insbesondere eines Elektrolytkondensators, der mittels einer Spannungserhöhung, z. B. einer Ladungspumpe oder eines Aufwärtswandlers, über die Nennspannung des Lastelements, insbesondere eines Motors einer Zentralverriegelung oder eines Steuergeräts einer Zentralverriegelung geladen wird, kann durch die im Kondensator gespeicherte Energie ein erforderlicher Impulsstrom zum Betätigen des Motors und/oder des Steuergeräts und somit zum Öffnen der Zentralverriegelung auch im Notfall sichergestellt werden.

Um mit einer möglichst geringen Anzahl an Bauteilen auszukommen, ist ein Lastelement im Falle des Ausfalls der Eingangsspannung über ein Schaltelement direkt mit dem mit erhöhter Spannung geladenen Kondensator automatisch verbindbar, so dass die darin gespeicherte Energie zur Aufrechterhaltung der Versorgungsspannung und somit zum wenigstens einmaligen Betrieb des Lastelementes zur Verfügung steht. Das Lastelement kann dabei durch die hohe Spannung beschädigt werden, dieses Risiko ist für den Notfall des Spannungsausfalls, beispielsweise durch Abriss einer Batterie, jedoch hinnehmbar.

Die Realisierung dieser automatischen Notfallfunktion gelingt mit besonders niedrigem Aufwand, wenn mittels eines ersten Steuergerätes die Eingangsspannung mit einer Sollspannung vergleichbar und bei Abfall der Eingangsspannung unter die Sollspannung, gegebenenfalls in Verbindung mit Notsignalen, z. B. Unfall, Zentralverriegelung öffnen, über Datenleitungen, das Schalten der Verbindung zwischen dem Eingang des Lastelementes und dem Kondensator auslösbar ist. In einer vorteilhaften Ausprägung der Schaltanordnung ist bei Ausfall der Eingangsspannung, gegebenenfalls in Verbindung mit Notsignalen, z. B. Unfall, Zentralverriegelung öffnen, über Datenleitungen, ein Signal ausgebbar, mittels dessen eine Funktion des Lastelementes auslösbar ist. Diese zusätzliche Möglichkeit zum Auslösen eines Vorganges kann beispielsweise für das automatische Deaktivieren einer Türverriegelung genutzt werden, wodurch der äußere Zugriff auf ein verunfalltes Fahrzeug ohne Mithilfe der Insassen möglich ist.

Die im Kondensator gespeicherte Energie wird optimal ausgenutzt, wenn im Falle des Schaltens einer Verbindung zwischen dem Lastelement und dem Kondensator zuvor eine Verbindung zwischen dem Lastelement und der Eingangsspannung automatisch unterbrechbar ist. Auf diese Weise wird eine Entladung des Energiespeichers durch einen Kurzschluss in der Schaltungsanordnung vermieden.

Der Ladevorgang des Kondensators wird in einer bevorzugten Ausgestaltung der Schaltungsanordnung beschleunigt, indem der Kondensator zunächst mit der Eingangsspannung und anschließend mit der Ladespannung aufladbar ist. Hierzu ist zweckmäßigerweise ein zweites Steuergerät zur Steuerung des Aufladens des Kondensators und zur Ansteuerung eines zweiten Schaltelements vorgesehen. Die gestufte Aufladung des Kondensators mit Eingangsspannung und anschließend mit höherer Ladespannung ist besonders dann vorteilhaft, wenn der Spannungswandler nur einen niedrigen Ladestrom erzeugen kann. Hierdurch verläuft der Ladevorgang langsam, wenn der Kondensator ausschließlich mit der erhöhtem Eingangsspannung aufladbar wäre. Durch die schnelle Aufladung mit der Eingangsspannung steht die Notversorgung des Lastelements kurz nach dem Einschalten der Eingangsspannung, beispielsweise kurz nach dem Anlassen eines Fahrzeugmotors, zur Verfügung. Diese Ausgestaltung der Erfindung gelingt mit geringem Aufwand, indem im Falle des Aufladens mit der Eingangsspannung mittels eines Steuergerätes eine Kondensatorspannung mit deren Sollspannung vergleichbar und im Falle des Erreichens der Sollspannung der Kondensator mittels eines zweiten Schaltelements mit dem Spannungswandler automatisch elektrisch verbindbar ist.

Die Betriebssicherheit der Schaltung kann erhöht werden, indem die Funktionstüchtigkeit der Schaltungsanordnung mittels eines Steuergerätes anhand eines Verlaufs der Kondensatorspannung prüfbar ist. Wird eine Funktionsuntüchtigkeit festgestellt, so ist diese vorteilhafterweise mittels einer an die Schaltungsanordnung anschließbaren Diagnosevorrichtung ausgebbar. Bei Routineuntersuchungen kann die Funktionstüchtigkeit somit wiederhergestellt werden.

Eine kostengünstige Ausführung für den Spannungswandler ist ein DC/DC-Aufwärtswandler. Zudem können je nach Ausführung der Schaltungsanordnung das erste und das zweite Steuergerät als ein gemeinsames Steuergerät ausgeführt sein. Beispielsweise können die getrennten Funktionen der beiden Steuergeräte als getrennte Funktionen in einem gemeinsamen Steuergerät, z. B. einem Türsteuergerät, integriert werden. Die Schaltungsanordnung ist im Falle eines Defektes leicht austauschbar und vor vorhandene Geräte, insbesondere Türsteuergeräte, schaltbar und somit nachrüstbar, wenn sie als Modul ausgeführt ist.

Die Verwendung einer erfindungsgemäßen Schaltungsanordnung in einer Zentralverriegelungsanlage eines Kraftfahrzeugs erhöht die Unfallsicherheit des Fahrzeuges, da sich auch nach Unterbrechung der Stromversorgung der Zentralverriegelungsanlage die Türverriegelung deaktivieren lässt. Die Türen sind unabhängig voneinander und autark hinsichtlich einer zentralen Energieversorgung entriegelbar, wenn das der Schaltungsanordnung nachgeschaltete Lastelement ein Türsteuergerät der Zentralverriegelungsanlage ist. Eine zentrale Notenergieversorgung, deren Versorgungsleitungen beim Unfall ebenfalls unterbrochen werden könnten, ist damit nicht erforderlich. Die Integration von Schaltungsanordnung und Türsteuergerät als eine Einheit ist zudem kostengünstiger.

Ausführungsbeispiele der Erfindung werden im Folgenden anhand einer Zeichnung näher erläutert. Darin zeigen:
- Figur 1: ein Blockschaltbild einer Schaltungsanordnung zur kurzzeitigen Aufrechterhaltung einer Versorgungs- spannung zur Ansteuerung eines Lastelements, z. B. eines Türsteuergeräts oder eines Motorsteuergeräts, im Normalbetrieb mit einer Batterie,
- Figur 2: ein Blockschaltbild der Schaltungsanordnung gemäß Figur 1 bei Störung der Batterie, z. B. nach einem Abriss der Batterie,
- Figur 3: eine mögliche Ausführungsform für einen Schaltplan einer Schaltungsanordnung gemäß Figur 1,
- Figur 4: eine weitere Ausführungsform für einen Schaltplan einer Schaltungsanordnung gemäß Figur 1,
und
- Figur 5: ein Diagramm einer Eingangsspannung und einer Kon- densatorspannung dieser Schaltungsanordnungen in Abhängigkeit von der Zeit.

Einander entsprechende Teile sind in allen Figuren mit den gleichen Bezugszeichen versehen.

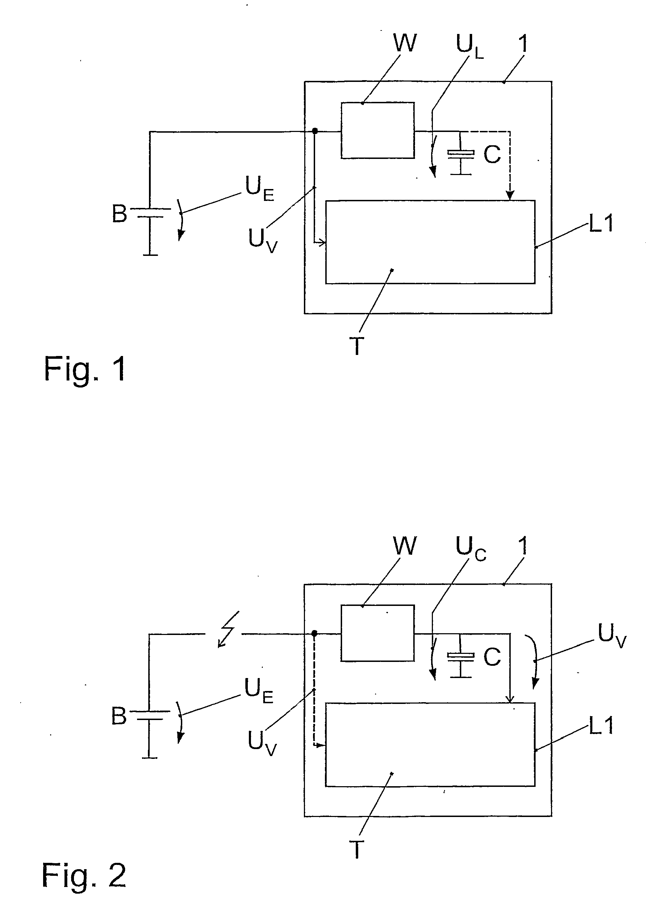

In den Figuren 1 und 2 ist schematisch eine Schaltungsanordnung 1 zur kurzzeitigen Aufrechterhaltung einer Versorgungsspannung U_{V} an einem Eingang eines Lastelements L₁ bei Ausfall einer Eingangsspannung U_{E} dargestellt. Das Lastelement L₁ ist beispielsweise ein Motor oder ein Steuergerät einer nicht abgebildeten Zentralverriegelungsanlage eines Fahrzeugs, die bei Ausfall der Eingangsspannung U_{E} die Türen des Fahrzeugs sicher entriegeln soll.

Nachfolgend wird die Schaltungsanordnung 1 am Beispiel eines an sich bekannten Türsteuergeräts T als Lastelement L₁ näher beschrieben. Das Türsteuergerät T dient der Ent- bzw. Verriegelung der Tür, wobei die Schaltungsanordnung 1 der Spannungsversorgung des Türsteuergeräts T sowohl im Normalbetrieb als auch im Störfall dient. Die Schaltungsanordnung 1 umfasst einen Spannungswandler W, dem eingangsseitig eine Batterie B vorgeschaltet und ausgangsseitig ein weiterer separater Energiespeicher - ein Kondensator C - nachgeschaltet ist. Als Spannungswandler W kann beispielsweise eine Ladungspumpe oder ein DC-DC-Aufwärtswandler eingesetzt werden. Als Batterie B dient eine herkömmliche Fahrzeugbatterie oder ein Generator. Als Kondensator C wird insbesondere ein Elektrolytkondensator oder ein anderer Kurzzeitenergiespeicher verwendet.

In Figur 1 ist der normale Betriebszustand der Schaltungsanordnung 1 gezeigt. Während des Normalbetriebs, d.h. die Batterie B ist nicht gestört und arbeitet störungsfrei, ist zur Energieversorgung des Türsteuergeräts T mit der Versorgungsspannung U_{V} dieses unmittelbar an die Batterie B beziehungsweise an einen nicht näher abgebildeten Generator angeschlossen. Die Batterie B stellt als Versorgungsspannung U_{V} eine Eingangsspannung U_{E} bereit.

Darüber hinaus ist an die Batterie B der Spannungswandler W angeschlossen. Mittels des Spannungswandlers W wird die Eingangsspannung U_{E} auf eine Ladespannung U_{L} erhöht, mit der der Kondensator C über die Nennspannung eines Motors der Türverriegelung aufgeladen und in geladenem Zustand gehalten wird. Der Kondensator C ist nicht mit dem Türsteuergerät T verbunden (durch die gestrichelte Linie angedeutet).

Bei Unterbrechung der Energieversorgung, beispielsweise durch Abriss der Stromleitung zur Batterie B oder Zerstörung der Batterie B bei einem Unfall, tritt die in Figur 2 gezeigte Situation ein. Das Türsteuergerät T wird nun direkt durch den Kondensator C mit der Versorgungsspannung U_{V} versorgt, indem automatisch eine elektrische Verbindung mit diesem geschlossen wird. Die Verbindung zwischen Batterie B und Türsteuergerät T wird unterbrochen (angedeutet durch die gestrichelte Linie). Die Kapazität des Kondensators C ist in Abhängigkeit von der in Bezug auf die Eingangsspannung U_{E} erhöhten Ladespannung U_{L} so bemessen, dass der Energieinhalt des voll geladenen Kondensators C und die daraus resultierende Kondensatorspannung U_{C} wenigstens für ein einmaliges Deaktivieren der Türverriegelung durch das Türsteuergerät T ausreicht. Von Vorteil ist hierbei, dass der Energieinhalt des Kondensators C bei gegebener Kapazität quadratisch mit der Ladespannung U_{L} wächst. D.h. Bei einer Verdopplung der Ladespannung U_{L} im Verhältnis zur Eingangsspannung U_{E} wird die vierfache Energiemenge im Kondensator C gespeichert. Dadurch ist ein Deaktivieren der Verriegelung bis zu einigen Sekunden nach dem Ausfall der Eingangsspannung U_{E} ermöglicht.

Vorzugsweise wird das Deaktivieren der Türverriegelung nach dem Ausfall der Eingangsspannung U_{E} automatisch ausgelöst, so dass Unfallhelfer die Türen von außen öffnen können, auch wenn der oder die Fahrzeuginsassen bewusstlos sind und demnach die Verriegelung nicht deaktivieren können.

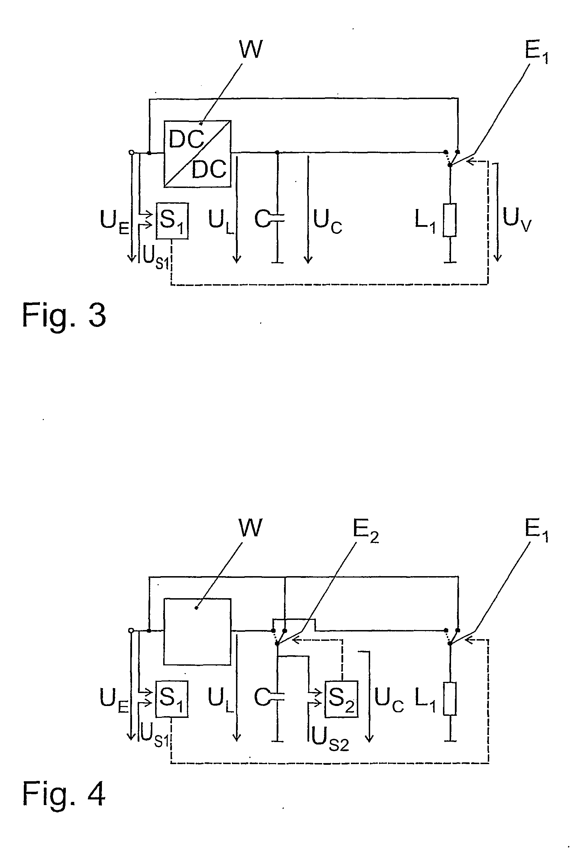

Figur 3 zeigt eine mögliche Ausführungsform für einen Schaltplan einer Schaltungsanordnung 1, in der ein Lastelement L₁ mittels eines ersten Schaltelements E₁ alternativ entweder mit der Eingangsspannung U_{E} der Batterie B im Normalbetrieb oder mit der Kondensatorspannung U_{C} des Kondensators C bei Ausfall der Eingangsspannung U_{E} verbindbar ist. Der Kondensator C ist mit einem als DC/DC-Aufwärtswandler ausgeführten Spannungswandler W verbunden, wodurch er mit einer im Verhältnis zur Eingangsspannung U_{E} erhöhten Ladespannung U_{L} aufladbar ist. Das erste Schaltelement E₁ wird durch ein erstes Steuergerät S₁ in Abhängigkeit des Betrages der Eingangsspannung U_{E} und einer vorgegebenen Sollspannung U_{S1} für die Eingangsspannung U_{E} angesteuert. Das erste Steuergerät S₁ kann beispielsweise aus einem Komparator bestehen, dessen Ausgang mit dem beispielsweise als ein Umschaltrelais oder Wechselschalter ausgeführten ersten Schaltelement E₁ verbunden ist. Das erste Schaltelement E₁ kann auch ein elektronisches Bauteil anstelle eines elektromechanischen Relais sein.

Im Normalbetrieb ist das erste Schaltelement E₁ so eingestellt, dass das Lastelement L₁ mit der Eingangsspannung U_{E} betrieben wird. D.h. die Versorgungsspannung U_{V} des Lastelements L₁ ist gleich der Eingangsspannung U_{E}. Das erste Steuergerät S₁ vergleicht nun laufend die anliegende Eingangsspannung U_{E} mit der vorgegebenen Sollspannung U_{S1} für die Eingangsspannung U_{E}. Wird diese unterschritten, so wird mittels des ersten Steuergeräts S₁ ein Umschaltvorgang des ersten Schaltelementes E₁ ausgelöst. Dabei wird durch Umschalten des ersten Schaltelements E₁ zunächst die elektrische Verbindung des Lastelements L₁ mit der Eingangsspannung U_{E} getrennt und anschließend die Verbindung des Lastelements L₁ mit dem Kondensator C hergestellt. Somit wird der Kondensator C zur Spannungsquelle für das Lastelement L₁ und die Versorgungsspannung U_{V} des Lastelements L₁ ist gleich der Kondensatorspannung U_{C}.

Auf das Trennen der elektrischen Verbindung des Lastelements L₁ mit der Eingangsspannung U_{E} kann verzichtet werden, wenn davon auszugehen ist, dass die Eingangsspannung U_{E} nur vollständig ausfallen kann. In diesem Fall bliebe die Verbindung des Lastelements L₁ mit der Eingangsspannung U_{E} bestehen, über das erste Schaltelement E₁ wäre das Lastelements L₁ zusätzlich mit dem Kondensator C verbindbar.

In Figur 4 ist eine Weiterentwicklung der in Figur 3 gezeigten Schaltungsanordnung 1 dargestellt, bei der der Kondensator C über ein als ein Umschalter ausgeführtes zweites Schaltelement E₂ entweder mit der Eingangsspannung U_{E} oder mit dem als Ladungspumpe ausgeführten Spannungswandler W verbindbar ist. Die Ladungspumpe erzeugt nur einen geringen Ladestrom, so dass ein Aufladen des Kondensators C nur langsam ausgeführt wird. Aus diesem Grund ist der Kondensator C nach einem Einschalten der Eingangsspannung U_{E} zunächst mit der Eingangsspannung U_{E} verbunden, wodurch er deutlich schneller aufgeladen wird. Ein zweites Steuergerät S₂ vergleicht laufend die Kondensatorspannung U_{C} mit einer Sollspannung U_{S2} für die Kondensatorspannung U_{C} und schaltet bei Erreichen der Sollspannung U_{S2} für die Kondensatorspannung U_{C} das zweite Schaltelement E₂ um, so dass der Kondensator C anschließend durch die Ladespannung U_{L} der Ladungspumpe weiter aufgeladen wird. Auch das zweite Steuergerät S₂ kann beispielsweise als ein Komparator ausgeführt sein, dessen Ausgang mit dem zweiten Schaltelement E₂ verbunden ist.

Alternativ können das erste und das zweite Steuergerät S₁ und S₂ als ein gemeinsames Steuergerät ausgebildet sein. Darüber hinaus kann das zweite Steuergerät S₂ auch zur Überwachung des Verlaufes der Kondensatorspannung U_{C} verwendet werden. Entspricht der Spannungsverlauf bei anliegender Eingangsspannung U_{E} nicht einer erwarteten Form, so ist ein Defekt des Spannungswandlers W, der Schaltelemente E₁ und/oder E₂ und/oder des Kondensators C anzunehmen. Vorzugsweise wird der Fehlerzustand bis zu einem Auslesen über ein an die Schaltungsanordnung 1 anschließbares, nicht abgebildetes Diagnosegerät gespeichert. Fehlfunktionen können so beispielsweise bei Routinekontrollen des Fahrzeugs entdeckt und behoben werden.

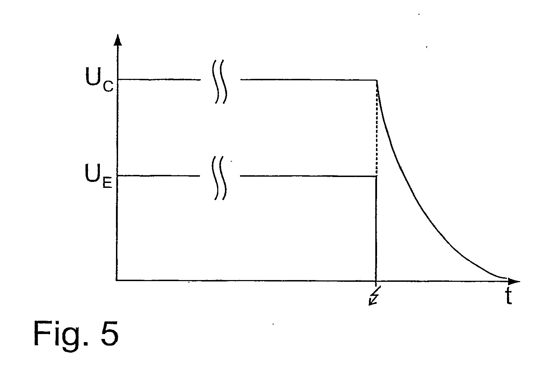

In Figur 5 ist der Spannungsverlauf von Eingangsspannung U_{E} und Kondensatorspannung U_{C} zeitlich über den Verlauf einer Störung z. B. mit Abriss einer Versorgungsleitung und Ausfall der Eingangsspannung U_{E} dargestellt. Zunächst ist die Eingangsspannung U_{E} konstant, die Kondensatorspannung U_{C} des aufgeladenen Kondensators C ist aufgrund der Spannungserhöhung etwa doppelt so hoch wie die Eingangsspannung U_{E}. Im Moment einer Störung fällt durch den Abriss der Versorgungsleitung die Eingangsspannung U_{E} aus. Durch das Schalten des Eingangs des Lastelements L₁ auf den Kondensator C entlädt sich dieser, wodurch die Kondensatorspannung U_{C} exponentiell abfällt. Es steht jedoch genug Energie zum Deaktivieren der Türverriegelung zur Verfügung, die im Moment der Störung, d.h. bei Identifizieren einer zu niedrigen Eingangsspannung U_{E} oder gar des Ausfalls der Eingangsspannung U_{E}, gegebenenfalls in Verbindung mit Notsignalen, z. B. Unfall, Zentralverriegelung öffnen, automatisch ausgelöst wird. Durch die gegenüber der Eingangsspannung U_{E} höheren Kondensatorspannung U_{C} als kurzzeitige Versorgungsspannung U_{V} für das Lastelement L1 ist es möglich, dass nach erfolgreichem Deaktivieren der Türverriegelung das Türsteuergerät T oder ein Motor der Türverriegelung beschädigt wird. Gegenüber dem sicheren Deaktivieren der Türverriegelung ist diese Beschädigung aber vernachlässigbar.

Die erfindungsgemäße Schaltungsanordnung 1 kann auch als separates Modul ausgeführt sein, welches einem Lastelement L₁, insbesondere einem herkömmlichen Türsteuergerät vorschaltbar ist ohne dieses ändern zu müssen. Das erste Schaltelement E₁ befindet sich dann noch innerhalb des Moduls, der Ausgang des Moduls liegt dann beispielsweise auf dem festen Pol des ersten Schaltelements E₁.

Die erfindungsgemäße Schaltungsanordnung 1 ist prinzipiell auch zur kurzzeitigen Notenergieversorgung für andere Lastelemente L₁ als Zentralverriegelungen geeignet, soweit der Kondensators C für einen ausreichenden Energieinhalt dimensionierbar ist.

### Bezugszeichenliste

- 1: Schaltungsanordnung
- B: Batterie
- T: Türsteuergerät
- U_{C}: Kondensatorspannung
- U_{E}: Eingangsspannung
- U_{V}: Versorgungsspannung
- U_{L}: Ladespannung
- U_{S1}, U_{S2}: Sollspannung
- L₁: Lastelement
- C: Kondensator
- W: Spannungswandler
- S₁: erstes Steuergerät
- E₁: erstes Schaltelement
- S₂: erstes Steuergerät
- E₂: erstes Schaltelement

## Patentansprüche

1. Schaltungsanordnung (1) zur kurzzeitigen Aufrechterhaltung einer Versorgungsspannung (U_{V}) zur Ansteuerung eines Lastelements (L₁) bei Ausfall einer Eingangsspannung (U_{E}), wobei die Eingangsspannung (U_{E}) mittels eines Spannungswandlers (W) zur Aufladung eines dem Spannungswandler (W) nachgeschalteten Kondensators (C) transformiert wird und bei Ausfall der Eingangsspannung (U_{E}) der Eingang des Lastelementes (L₁) mit dem Kondensator (C) automatisch elektrisch verbunden wird **dadurch gekennzeichnet daß** die Eingangsspannung (U_{E}) auf eine höhere Ladespannung (U_{L}) transformiert wird.

2. Schaltungsanordnung (1) nach Anspruch 1, **dadurch gekennzeichnet, dass** der Spannungswandler (W) als ein Aufwärtswandler ausgebildet ist.

3. Schaltungsanordnung (1) nach Anspruch 1 oder 2, **dadurch gekennzeichnet, dass** die Eingangsspannung (U_{E}) mit einer Sollspannung (U_{S1}, Uₛ₂) verglichen wird und bei Abfall der Eingangsspannung (U_{E}) unter die Sollspannung (U_{S1}, U_{S2}) das automatische Schalten der Verbindung zwischen dem Lastelement (L₁) und dem Ausgang des Kondensators (C) ausgelöst wird.

4. Schaltungsanordnung (1) nach einem der vorhergehenden Ansprüche, **dadurch gekennzeichnet, dass** ein erstes Steuergerät (S₁) zum Vergleich der Eingangsspannung (U_{E}) mit einer Sollspannung (U_{S1}) und zur Ansteuerung eines ersten Schaltelements (E₁) bei Abfall der Eingangsspannung (U_{E}) unter die Sollspannung (U_{S1}) zur automatischen Verbindung des Lastelementes (L₁) mit dem Ausgang des Kondensators (C) vorgesehen ist.

5. Schaltungsanordnung (1) nach einem der vorhergehenden Ansprüche, **dadurch gekennzeichnet, dass** bei Ausfall der Eingangsspannung (U_{E}) ein Signal ausgegeben wird, mittels dessen eine Funktion des Lastelementes (L₁) auslösbar ist.

6. Schaltungsanordnung (1) nach einem der vorhergehenden Ansprüche, **dadurch gekennzeichnet, dass** im Fall des Schaltens einer Verbindung zwischen dem Lastelement (L₁) und dem Kondensator (C) zuvor eine Verbindung zwischen dem Lastelement (L₁) und der Eingangsspannung (U_{E}) automatisch unterbrechbar ist.

7. Schaltungsanordnung (1) nach einem der vorhergehenden Ansprüche, **dadurch gekennzeichnet, dass** der Kondensator (C) zunächst mit der Eingangsspannung (U_{E}) und anschließend mit der Ladespannung (U_{L}) aufladbar ist.

8. Schaltungsanordnung (1) nach Anspruch 7, **dadurch gekennzeichnet, dass** im Fall des Aufladens mit der Eingangsspannung (U_{E}) eine Kondensatorspannung (U_{C}) mit einer Sollspannung (U_{S}) vergleichbar und im Falle des Erreichens der Sollspannung (U_{S}) der Kondensator (C) mit dem Spannungswandler (W) automatisch elektrisch verbindbar ist, wobei zuvor eine Verbindung des Kondensators (C) mit der Eingangsspannung (U_{E}) trennbar ist.

9. Schaltungsanordnung (1) nach einem der vorhergehenden Ansprüche, **dadurch gekennzeichnet, dass** ein zweites Steuergerät (S₂) zur Steuerung des Aufladens des Kondensators (C) und zur Ansteuerung eines zweiten Schaltelements (E₂) in Abhängigkeit vom Vergleich der Kondensatorspannung (U_{C}) mit einer Sollspannung (U_{S2}) vorgesehen ist.

10. Schaltungsanordnung (1) nach Anspruch 9, **dadurch gekennzeichnet, dass** das zweite Schaltelement (E₂) als ein elektromechanischer oder elektronischer Wechselschalter ausgebildet ist.

11. Schaltungsanordnung (1) nach einem der vorhergehenden Ansprüche, **dadurch gekennzeichnet, dass** die Funktionstüchtigkeit der Schaltungsanordnung (1) anhand eines Verlaufs der Kondensatorspannung (U_{C}) prüfbar ist.

12. Schaltungsanordnung (1) nach Anspruch 11, **dadurch gekennzeichnet, dass** im Fall einer Funktionsuntüchtigkeit des Kondensators (C) diese mittels einer Diagnosevorrichtung ausgebbar ist.

13. Schaltungsanordnung (1) nach einem der vorhergehenden Ansprüche, **dadurch gekennzeichnet, dass** die Schaltungsanordnung (1) als Modul ausgeführt ist.

14. Verwendung einer Schaltungsanordnung (1) nach einem der vorhergehenden Ansprüche in einer Zentralverriegelungsanlage eines Fahrzeugs.

15. Verwendung nach dem Anspruch 14, wobei das der Schaltungsanordnung (1) nachgeschaltete Lastelement (L₁) ein Türsteuergerät (T) der Zentralverriegelungsanlage ist.

## Claims

1. A circuit arrangement (1) for the short-time maintenance of a supply voltage (U_{V}) for driving a load element (L₁) in the event of the loss of an input voltage (U_{E}), wherein the input voltage (U_{E}) is transformed by means of a voltage transformer (W) for charging a capacitor (C) connected downstream of the voltage transformer (W) and the input of the load element (L₁) is automatically electrically connected to the capacitor (C) in the event of the loss of the input voltage (U_{E}), **characterized in that** the input voltage (U_{E}) is transformed to a higher charging voltage (U_{L}).

2. The circuit arrangement (1) according to Claim 1, **characterized in that** the voltage transformer (W) is formed as an up converter.

3. The circuit arrangement (1) according to Claim 1 or 2, **characterized in that** the input voltage (U_{E}) is compared with a nominal voltage (U_{S1}, U_{S2}) and the automatic switching of the connection between the load element (L₁) and the output of the capacitor (C) is actuated in the event of the input voltage (U_{E}) dropping below the nominal voltage (U_{S1}, U_{S2}).

4. The circuit arrangement (1) according to any one of the preceding claims, **characterized in that** a first control device (S₁) is provided for comparing the input voltage (U_{E}) with a nominal voltage (U_{S1}) and for driving a first circuit element (E₁) in the event of the input voltage (U_{E}) dropping below the nominal voltage (U_{S1}) for automatically connecting the load element (L₁) to the output of the capacitor (C).

5. The circuit arrangement (1) according to any one of the preceding claims, **characterized in that** in the event of the loss of the input voltage (U_{E}), a signal is outputted, by means of which a function of the load element (L₁) is activatable.

6. The circuit arrangement (1) according to any one of the preceding claims, **characterized in that** in the event of the switching of a connection between the load element (L₁) and the capacitor (C), a connection between the load element (L₁) and the input voltage (U_{E}) is automatically interruptable beforehand.

7. The circuit arrangement (1) according to any one of the preceding claims, **characterized in that** the capacitor (C) is chargeable initially with the input voltage (U_{E}) and afterwards with the charging voltage (U_{L}).

8. The circuit arrangement (1) according to Claim 7, **characterized in that** in the event of the charging with the input voltage (U_{E}), a capacitor voltage (U_{C}) is comparable with a nominal voltage (U_{S}), and in the event of reaching the nominal voltage (U_{S}), the capacitor (C) is automatically electrically connectable to the voltage transformer (W), wherein a connection between the capacitor (C) and the input voltage (U_{E}) is interruptable beforehand.

9. The circuit arrangement (1) according to any one of the preceding claims, **characterized in that** a second control device (S₂) is provided for controlling the charging of the capacitor (C) and for driving a second circuit element (E₂) in dependence on the comparison of the capacitor voltage (U_{C}) with a nominal voltage (U_{S2}).

10. The circuit arrangement (1) according to Claim 9, **characterized in that** the second circuit element (E₂) is formed as an electromechanical or electronic pole changing switch.

11. The circuit arrangement (1) according to any one of the preceding claims, **characterized in that** the operatability of the circuit arrangement (1) is testable on the basis of a course of the capacitor voltage (U_{C}).

12. Circuit arrangement (1) according to Claim 11**, characterized in that** in the event of an inoperatability of the capacitor (C), said inoperatability is outputable by means of a diagnostic device.

13. The circuit arrangement (1) according to any one of the preceding claims, **characterized in that** the circuit arrangement (1) is realized as a module.

14. The use of a circuit arrangement (1) according to any one of the preceding claims in a centrally controlled locking system of a vehicle.

15. The use according to Claim 14, wherein the load element (L₁) connected downstream of the circuit arrangement (1) is a door control device (T) of the centrally controlled locking system.

## Revendications

1. Circuit (1) pour le maintien bref d'une tension d'alimentation (U_{V}) pour le pilotage d'un élément de charge (L₁) en cas de coupure d'une tension d'entrée (U_{E}), la tension d'entrée (U_{E}) étant transformée au moyen d'un convertisseur de tension (W) pour le chargement d'un condensateur (C) monté en aval du convertisseur de tension (W) et, en cas de coupure de la tension d'entrée (U_{E}), l'entrée de l'élément de charge (L₁) étant automatiquement raccordée électriquement au condensateur (C), **caractérisé en ce que** la tension d'entrée (U_{E}) est transformée en une tension de charge (U_{L}) plus élevée.

2. Circuit (1) selon la revendication 1, **caractérisé en ce que** le convertisseur de tension (W) est constitué sous forme de convertisseur élévateur.

3. Circuit (1) selon la revendication 1 ou 2, **caractérisé en ce que** la tension d'entrée (U_{E}) est comparée à une tension de consigne (U_{S1}, U_{S2}) et, en cas de chute de la tension d'entrée (U_{E}) sous la tension de consigne (U_{S1}, U_{S2}), la connexion automatique du raccordement entre l'élément de charge (L₁) et la sortie du condensateur (C) est déclenchée.

4. Circuit (1) selon l'une des revendications précédentes, **caractérisé en ce qu'**il est prévu un premier appareil de commande (S₁) pour comparer la tension d'entrée (U_{E}) à une tension de consigne (U_{S1}) et pour piloter un premier élément de commutation (E₁) en cas de chute de la tension d'entrée (U_{E}) sous la tension de consigne (U_{S1}) pour le raccordement automatique de l'élément de charge (L₁) à la sortie du condensateur (C).

5. Circuit (1) selon l'une des revendications précédentes, **caractérisé en ce que,** en cas de coupure de la tension d'entrée (U_{E}), il est délivré un signal au moyen duquel un fonctionnement de l'élément de charge (L₁) peut être déclenché.

6. Circuit (1) selon l'une des revendications précédentes, **caractérisé en ce que,** en cas de connexion d'un raccordement entre l'élément de charge (L₁) et le condensateur (C), un raccordement entre l'élément de charge (L₁) et la tension d'entrée (U_{E}) peut être préalablement coupée automatiquement.

7. Circuit (1) selon l'une des revendications précédentes, **caractérisé en ce que** le condensateur (C) peut être chargé d'abord avec la tension d'entrée (U_{E}) et ensuite avec la tension de charge (U_{L}).

8. Circuit (1) selon la revendication 7, **caractérisé en ce que**, en cas de chargement avec la tension d'entrée (U_{E}), une tension de condensateur (U_{C}) peut être comparée à une tension de consigne (U_{S}) et, dans le cas où la tension de consigne (U_{S}) est atteinte, le condensateur (C) peut être automatiquement raccordé électriquement au convertisseur de tension (W), un raccordement du condensateur (C) à la tension d'entrée (U_{E}) pouvant être coupé préalablement.

9. Circuit (1) selon l'une des revendications précédentes, **caractérisé en ce qu'**il est prévu un deuxième appareil de commande (S₂) pour la commande du chargement du condensateur (C) et pour le pilotage d'un deuxième élément de commutation (E₂) en fonction de la comparaison de la tension de condensateur (U_{c}) avec une tension de consigne (U_{S2}).

10. Circuit (1) selon la revendication 9, **caractérisé en ce que** le deuxième élément de commutation (E₂) est constitué comme un commutateur inverseur électromécanique ou électronique.

11. Circuit (1) selon l'une des revendications précédentes, **caractérisé en ce que** l'aptitude fonctionnelle du circuit (1) peut être contrôlée à l'aide d'une courbe de la tension de condensateur (U_{c}).

12. Circuit (1) selon la revendication 11, **caractérisé en ce que,** en cas d'aptitude fonctionnelle du condensateur (C), celle-ci peut être affichée au moyen d'un dispositif de diagnostic.

13. Circuit (1) selon l'une des revendications précédentes, **caractérisé en ce que** le circuit (1) est exécuté en tant que module.

14. Utilisation d'un circuit (1) selon l'une des revendications précédentes dans un système de verrouillage centralisé d'un véhicule.

15. Utilisation selon la revendication 14, l'élément de charge (L₁) monté en aval du circuit (1) étant un appareil de commande de porte (T) du système de verrouillage centralisé.
